# EUROPÄISCHE PATENTANMELDUNG

(11) **EP 4 498 758 A1**
(43) Veröffentlichungstag der Anmeldung: **29.01.2025**
(21) Anmeldenummer: 24188779.3
(22) Anmeldetag: 16.07.2024
(51) Int. Cl.: H05B 6/06, B23P 11/02, H05B 6/14

(54) **INDUKTIONSSPULEN-BAUEINHEIT UND VERFAHREN ZUR STEUERUNG EINES INDUKTIVEN ERWÄRMUNGSVORGANGS FÜR EINE INDUKTIONSSPULEN-BAUEINHEIT**

(30) Priorität: 25.07.2023 DE 102023119708
(71) Anmelder: Haimer GmbH, 86568 Hollenbach-Igenhausen (DE)
(72) Erfinder: Podhrázký, Antonin, 67531 Jemnice (CZ)

(57) **Zusammenfassung**

Die Erfindung betrifft eine **Induktionsspulen-Baueinheit** mit einer Induktionsspule, in welche eine Hülsenpartie eines Werkzeughalters einbringbar ist, sowie ein **Verfahren zur Steuerung eines induktiven Erwärmungsvorgangs** für eine Induktionsspulen-Baueinheit mit einer in einer Induktionsspule der Induktionsspulen-Baueinheit eingebrachten Hülsenpartie eines Werkzeughalters.

Um den Automatisierungsgrad und die Betriebssicherheit bei einer Induktionsspulen-Baueinheit zu erhöhen, ist vorgesehen, dass während des induktiven Erwärmungsvorgangs bei der in die Induktionsspule eingebrachten Hülsenpartie ein zeitlicher Verlauf oder ein Frequenzverlauf eines Spulenstroms und/oder einer Spulenspannung und/oder eines Eingangsstroms und/oder einer Eingangsspannung für die in die Induktionsspule eingebrachte Hülsenpartie ermittelt wird bzw. werden. Weiter wird bzw. werden dann der (Spulenstrom-)Verlauf und/oder der (Spulenspannung-)Verlauf und/oder der (Eingangsstrom-)Verlauf und/oder der (Eingangsspannung-Verlauf analysiert. Anhand des analysierten Verlaufs bzw. der ausgewerteten Verläufe, insbesondere anhand eines Verlaufsverhaltens und/oder auch einer Verlaufsveränderung und/oder eines Verlaufsveränderungsverhaltens wird entschieden, ob der, insbesondere ununterbrochene, Erwärmungsvorgang fortgesetzt oder beendet wird.

## Beschreibung

Die Erfindung betrifft eine **Induktionsspulen-Baueinheit** mit einer Induktionsspule, in welche eine Hülsenpartie eines Werkzeughalters einbringbar ist, sowie ein **Verfahren zur Steuerung eines induktiven Erwärmungsvorgangs** für eine Induktionsspulen-Baueinheit mit einer in einer Induktionsspule der Induktionsspulen-Baueinheit eingebrachten Hülsenpartie eines Werkzeughalters.

Derartige gattungsgemäße Induktionsspulen-Baueinheiten sind aus dem Stand der Technik, beispielsweise aus der EP 1 867 211 A1 bekannt.

Diese bekannten Induktionsspulen-Baueinheiten werden dazu verwendet, Werkzeughalter mittels durch Induktionsspulen erzeugbarer magnetischer Wechselfelder und der dadurch in den in den Induktionsspulen der Induktionsspulen-Baueinheiten eingebrachten Werkzeughaltern induzierten Wirbelströme thermisch aufzuweiten, um in diesem aufgeweiteten Zustand des Werkzeughalters dort ein Werkzeug einsetzen zu können, das nach einem Abkühlungsvorgang des Werkzeughalters dann fest und symmetrisch von diesem gehalten wird. Dieser Vorgang wird - kurz - auch als induktives Einschrumpfen von Werkzeugen in Werkzeughaltern bezeichnet und ist als solcher bekannt.

Für eine weitergehende Beschreibung der technischen und betriebsmäßigen Hintergründe sei daher auf die genannte Patentanmeldung verwiesen.

Bei einer solchen bekannten Induktionsspulen-Baueinheit stellt sich jedoch das Problem, dass für einen effizienten Betrieb derselben, d.h. dem induktiven Einschrumpfen von Werkzeugen in Werkzeughalter, im Speziellen beim Erwärmen der Werkzeughalter, die Induktionsspulen-Baueinheit hinsichtlich verschiedener Betriebsparameter, wie insbesondere auch eine Erwärmungsdauer, jeweils individuell auf den gerade/aktuell darin gehaltenen Werkzeughalter einzustellen ist, was einen hohen Grad von manuellem Eingriff erfordert und somit die Taktzeiten zum Tauschen eines Werkzeugs in verschiedenen Typen von Werkzeughaltern unter Umständen deutlich verlängert. Manuelle Eingriffe stellen überdies auch immer potentielle Fehlerquellen dar.

Wird andererseits eine derartige Einstellung auf den momentan gehaltenen Werkzeughalter nicht oder fehlerhaft vorgenommen, kann unter Umständen der Betrieb der Induktionsspulen-Baueinheit ineffizient sein, da die vorgesehenen Wirbelströme nicht geeignet in dem Werkzeughalter induziert werden. In besonders ungünstigen Fällen, wie beispielsweise bei zu langen Erwärmungsdauern, kann es sogar zu einer Überhitzung und damit Zerstörung des Werkzughalters kommen.

Es ist somit die Aufgabe der vorliegenden Erfindung, eine Induktionsspulen-Baueinheit sowie ein Verfahren zur Steuerung eines induktiven Erwärmungsvorgangs für eine Induktionsspulen-Baueinheit vorzusehen, das die eben genannten Nachteile von aus dem Stand der Technik bekannten derartigen Induktionsspulen-Baueinheiten überwinden kann, wobei die Induktionsspulen-Baueinheit insbesondere einen erhöhten Automatisierungsgrad aufweisen und somit bei hoher Betriebssicherheit mit kürzeren Taktzeiten betrieben werden kann.

Diese Aufgabe wird gelöst durch eine **Induktionsspulen-Baueinheit** und ein **Verfahren zur Steuerung eines induktiven Erwärmungsvorgangs** für eine Induktionsspulen-Baueinheit mit den Merkmalen des jeweiligen unabhängigen Anspruchs. Vorteilhafte Weiterbildungen der Erfindung sind Gegenstand abhängiger Ansprüche sowie der nachfolgenden Beschreibung und beziehen sich sowohl auf die **Induktionsspulen-Baueinheit** als auch auf das **Verfahren zur Steuerung eines induktiven Erwärmungsvorgangs** für eine Induktionsspulen-Baueinheit.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die **Induktionsspulen-Baueinheit** als auch das **Verfahren zur Steuerung eines induktiven Erwärmungsvorgangs** für eine Induktionsspulen-Baueinheit sehen eine Induktionsspule bei der Induktionsspulen-Baueinheit vor, in welche eine Hülsenpartie eines Werkzeughalters einbringbar ist (anordnungsseitig) bzw. eingebracht ist bzw. wird (verfahrensseitig).

### Verfahren

Bei dem **Verfahren zur Steuerung eines induktiven Erwärmungsvorgangs** für eine Induktionsspulen-Baueinheit, beispielsweise eine Schrumpfvorrichtung, mit einer in eine Induktionsspule der Induktionsspulen-Baueinheit eingebrachten Hülsenpartie eines Werkzeughalters ist vorgesehen, dass
während des, insbesondere ununterbrochenen, induktiven Erwärmungsvorgangs bei der in die Induktionsspule eingebrachten Hülsenpartie ein zeitlicher Verlauf oder ein Frequenzverlauf
- eines Spulenstroms, kurz und einfach ausgedrückt, die Stromstärke des bei der Spule bzw. in einem Spulenkreis entstehenden Spulenstroms über die Zeit oder über die Frequenz, und/oder
- einer Spulenspannung, kurz und anders ausgedrückt, die Spannung des an der Spule anliegenden oder in dem Spulenkreis abgreifbaren Spulenstroms über die Zeit oder über die Frequenz, und/oder
- eines Eingangsstroms und/oder einer Eingangsspannung, kurz und einfach ausgedrückt, die Stromstärke und/oder die Spannung eines vor der Spule bzw. vor dem Spulenkreis entstehenden Stroms, beispielsweise des in einem Eingangskreis oder einen Zwischenkreis entstehenden Stroms, über die Zeit oder über die Frequenz, für die in die Induktionsspule eingebrachte Hülsenpartie ermittelt wird bzw. werden.

Unter einem zeitlichen Verlauf bzw. einem Frequenzverlauf (manchmal auch als Frequenzcharakteristik bezeichnet) mag hier, anschaulich und vereinfacht ausgedrückt, insbesondere eine Abbildung oder Zusammenhang verstanden werden, deren eine Abbildungsgröße einer Abbildungsvorschrift, welche Abbildungsvorschrift die eine Abbildungsgröße auf eine zweite abgebildete Größe abbildet, eine Zeit bzw. eine Frequenz ist. Die abgebildete zweite Größe kann so dann hier der vorerwähnte Spulenstrom und/oder Spulenspannung und/oder Eingangsstrom und/oder Eingangsspannung - oder auch eine daraus unmittelbar ableit- bzw. erlang-/errechenbare Größe, wie Phasenlage bzw. Phasenverschiebung, sein.

Mathematisch mag dies vereinfacht durch: (Spulenstrom / Spulenspannung / Eingangsstrom / Eingangsspannung (bzw. abgeleitete Größe)) = f(Zeit bzw. Frequenz)
mit: f = Abbildungsvorschrift/Zusammenhang
ausdrückbar sein.

Weiter wird bzw. werden dann der (Spulenstrom-)Verlauf und/oder der (Spulenspannung-)Verlauf und/oder der (Eingangsstrom- )Verlauf und/oder der (Eingangsspannung-)Verlauf - bzw. die abgeleitete Größe analysiert.

Anhand des analysierten Verlaufs bzw. der ausgewerteten Verläufe, insbesondere anhand eines Verlaufsverhaltens und/oder auch einer Verlaufsveränderung und/oder eines Verlaufsveränderungsverhaltens wird entschieden, ob der, insbesondere ununterbrochene, Erwärmungsvorgang fortgesetzt oder beendet wird.

Analysiert kann so dann hier bedeuten, dass das Verlaufsverhalten und/oder die Verlaufsänderung und/oder das Verlaufsänderungsverhalten des zeitlichen bzw. Frequenzverlaufs bestimmt bzw. untersucht, insbesondere anhand bestimmbarer Parameter, wird.

Hier mag insbesondere unter dem Verlaufsverhalten Veränderungen im Verlauf verstanden werden, beispielsweise steigende, fallende und/oder gleichbleibende Verläufe wie auch ein Krümmungsverhalten des Verlaufs, wohingegen unter Verlaufsveränderung/-sverhalten Änderungen des Verlaufs selbst bzw. als Ganzes verstanden werden, beispielsweise ändert sich der verlauf über die Zeit und/oder die Erwärmungstemperatur der in die Induktionsspule eingebrachten Hülsenpartie, d.h. im Allgemeinen einer dritten Dimension.

Der Erfindung liegt die Erkenntnis zugrunde, dass sich die magnetische Eigenschaft, wie eine magnetische Permeabilität, der in die Induktionsspule eingebrachten Hülsenpartie und so die Induktivität des Gesamtsystems - umfassend auch die Induktionsspule und darin eingebrachte Hülsenpartie - und/oder eine elektrische Eigenschaft, wie ein elektrischer Widerstand des Gesamtsystems in Abhängigkeit der Erwärmung bzw. der Erwärmungstemperatur der in die Induktionsspule eingebrachten Hülsenpartie verändert.

Die Veränderung bei der Permeabilität bzw. der Induktivität ist dabei, was festgestellt wurde, umso größer, je näher sich die Erwärmungstemperatur der in die Induktionsspule eingebrachten Hülsenpartie ihrer Curie-Temperatur Tc annähert. Wohingegen die Veränderung bei der elektrischen Eigenschaft, wie dem Widerstand, bei größerem Abstand zur Curie-Temperatur Tc, wie beispielsweise zu Beginn einer Erwärmung, unterhalb der Curie-Temperatur Tc, dominant ist.

Dieses führt wiederum dazu, dass sich die temperaturabhängige Veränderung von Permeabilität, der Induktivität und/oder der elektrischen Eigenschaft bzw. dem elektrischen Widerstand durch eine "Dynamik" im Verlauf oder auch der Verlaufsänderung/des Verlaufsänderungsverhalten erkennen lässt bzw. dort wiederspiegelt - insbesondere mit unterschiedlichem Einfluss bzw. Dominanz in unterschiedlichen Temperaturbereichen.

Dabei wurde eben auch festgestellt, dass sich dies insbesondere im Spulenstrom, der Spulenspannung und im Eingangsstrom und der Eingangsspannung - und so auch in den daraus ableit- bzw. erlang-/errechenbarer Größen, wie der Phasenlage bzw. der Phasenverschiebung, wiederspiegelt.

Vereinfacht und kurz beschreibend ausgedrückt, im unteren Temperaturbereich wird sich insbesondere die Widerstandsänderung und in Annäherung an die bzw. nahe bei der Curie-Temperatur Tc die Permeabilitäts-/Induktivitätsänderung im Spulenstrom, der Spulenspannung und im Eingangsstrom und der Eingangsspannung bzw. in den daraus ableit- bzw. erlang-/errechenbarer Größen, wie der Phasenlage bzw. der Phasenverschiebung, wiederspiegeln.

D.h., der einen (Erwärmungs-)Zustand der eingebrachten Hülsenpartie am zuverlässigsten beschreibende/abbildende/nachverfolgbare bzw. den erkannten temperaturabhängigen Effekt am zuverlässigsten beschreibende/abbildende Verlauf ist derjenige des Spulenstroms, der Spulenspannung und des Eingangsstroms und der Eingangsspannung bzw. daraus ableitbarer Grö-ßen.

Durch einen - diese Dynamik bzw. Veränderung erkennenden/abbildenden - Parameter (oder mehrere Parameter) kann diese Veränderung berücksichtigt/(analytisch) fassbar gemacht werden - und so darüber ein Entscheidungskriterium bei einer Erwärmung der eingebrachten Hülsenpartie festgelegt werden.

Ein solcher - die Verlaufsdynamik bzw. das Verlaufsverhalten oder die Verlaufsveränderung/das Verlaufsveränderungsverhalten beschreibender - Parameter kann beispielsweise - insbesondere im Falle zeitlicher Verläufe - eine Veränderung von Amplituden(-werten), insbesondere von Amplitudenextrema, im Speziellen von Amplitudenmaxima, abbilden bzw. darstellen, wie beispielsweise das Fallen/Abnehmen oder das Konstantbleiben oder das Zunehmen/Ansteigen von Stromstärken oder Spannungen.

Auch kann ein solcher - die Verlaufsdynamik bzw. das Verlaufsverhalten oder die Verlaufsveränderung/das Verlaufsveränderungsverhalten beschreibender - Parameter beispielsweise - insbesondere im Falle von Frequenzverläufen - ein Amplitudenextremum, insbesondere eine Resonanzfrequenz, eine Amplitudenextremumänderung, eine Varianz bzw. Kurvenbreite/Bandbreite bzw. eine Varianz-/Kurvenbreiten-/Bandbreitenänderung und/oder eine Resonanzfrequenzänderung sein.

D.h., einfach und anschaulich gesehen, ein solcher - die Verlaufsdynamik bzw. das Verlaufsverhalten oder die Verlaufsveränderung/das Verlaufsveränderungsverhalten beschreibender - Parameter ist eben keine einfache Kenngröße, die statisch einen bestimmten Zustand bei der Leistungsübertragung bzw. Leistungsaufnahme beschreibt (, wie beispielsweise ein bestimmter Stromstärken-/Spannungswert zu einem bestimmten Zeitpunkt bzw. im zeitlichen Verlauf), sondern eine darüberhinausgehende und weitergreifende Kenngröße, welche eine "Dynamik" im zeitlichen bzw. im Frequenzverlauf/in der Frequenzverlaufsänderung abbildet.

Vereinfacht - mathematisch - ausgedrückt, eine (mathematische) Kenngröße bzw. eine Ableitung höherer Ordnung bei dem zeitlichen Verlauf bzw. dem Frequenzverlauf/der Frequenzverlaufsänderung.

Besonders zweckmäßig ist es so, wenn - beispielshaft - die Verlaufsdynamik unter Verwendung einer Ableitung oder Tangente an den Verlauf oder Verlaufsänderung - und/oder an eine Verbindungskurve, welche Amplitudenwerte, im Speziellen die Amplitudenmaxima, des Verlaufs, insbesondere des zeitlichen Verlaufs, verbindet, beschrieben wird. Kurz, in diesem Fall wäre der Parameter eine Tangente.

Anders ausgedrückt, der Parameter kann - zweckmäßig mathematisch gefasst - eine Ableitung des bzw. eine Tangente an den Verlauf, insbesondere zeitlichen Verlauf, sein - und bildet so die, insbesondere zeitliche, Veränderung des Spulenstroms bzw. der Spulenspannung bzw. des Eingangsstroms bzw. der Eingangsspannung ab.

Die Entscheidung, ob der Erwärmungsvorgang fortgesetzt oder beendet wird, kann dann insbesondere unter Verwendung einer solchen Ableitung oder Tangente/-en, insbesondere unter Verwendung der Änderung einer Steigung/-en der Tangente/-en getroffen werden.

Insbesondere Übergänge bei der Steigung der Tangente können hier von bedeutender Aussage-/Entscheidungskraft sein, wie beispielsweise der Übergang einer fallenden Tangente in eine horizontale Tangente bzw. vice versa oder einer horizontalen Tangente in eine steigende Tangente bzw. vice versa.

Zeigen so beispielsweise die Parameter des zeitlichen Verlaufs des Spulenstroms, der Spulenspannung und/oder des Eingangsstroms und/oder der Eingangsspannung einen horizontalen Verlauf oder ein Ansteigen des Verlaufs bzw. den Übergang einer fallenden Tangente in eine horizontale Tangente oder den Übergang einer horizontalen Tangente in eine steigende Tangente, so kann bei solchem Verhalten der Erwärmungsvorgang abgebrochen werden ("Abbruchsverhalten").

Entsprechendes gilt genauso für die Krümmung und/oder das Krümmungsverhalten des Verlaufs.

Insbesondere kann der Abbruch beispielsweise dann schon durchgeführt werden, sobald - nur einer bzw. der (zeitlich) erste - der (Verlaufs-)Parameter das definierte, beschriebene Abbruchsverhalten zeigt - oder - alternativ - auch erst dann, wenn mehrere bzw. alle (Verlaufs-)Parameter (hier von Spulenstrom, Spulenspannung, Eingangsstrom und Eingangsspannung) das vorbestimmbare Abbruchsverhalten zeigen ((vorgebbares) "Abbruchskriterium").

Dabei können auch - Hülsenpartie individuell - jeweils eigene für einen bestimme Hülsenpartie bzw. für bestimmte Hülsenpartien eigene Abbruchkriterien festgelegt werden, so beispielsweise, dass bei Durchmesser größere Hülsenpartien mehrere bzw. alle Parameter das Abbruchsverhalten zeigen, wohingegen bei Durchmesser kleineren Hülsenpartien nur ein Parameter das Abbruchsverhalten zeigen muss.

Zweckmäßig kann es hier insbesondere sein, wenn ein effektiver Strom- bzw. Spannungsverlauf der ermittelten Zeit-/Frequenz-Verläufe bestimmt - und dieser weiter der Parameterermittlung zugrunde gelegt wird, geben die effektiven Verläufe den tatsächlichen Strom bzw. Spannungsverlauf realistischer wieder.

Entsprechendes gilt, wenn der ermittelte Zeit-/Frequenz-Verlauf gemessen, geglättet, gemittelt, gefiltert und/oder normiert wird.

Insbesondere kann es auch zweckmäßig sein, die Verläufe auf eine Referenzspannung zu normieren, beispielsweise auf eine deutsche Referenznetzspannung. Eine solche Normierung ermöglicht die Unabhängigkeit des Verfahrens von einem jeweiligen Land mit dortiger jeweiliger Netzspannung.

Darüber hinaus kann es auch zweckmäßig sein, wenn die Entscheidung auch in Abhängigkeit einer Geometrie oder einer sonstigen physikalischen Eigenschaft, wie beispielsweise ein Material oder eine Masse, der in die Induktionsspule der Induktionsspulen-Baueinheit eingebrachten Hülsenpartie getroffen wird. Eine solche Geometrie kann beispielsweise ein Außendurchmesser der eingebrachten Hülsenpartie sein.

Diesem liegt zugrunde, dass zu messende Größen (neben der Temperatur auch) entscheidend davon abhängen, in welchem Maß die Hülsenpartie das Zentrum bzw. den sogenannten Kern der Induktionsspule ausfüllt, d. h. ob die betreffende Hülsenpartie einen kleineren oder größeren (Außen-)Durchmesser bzw. mehr oder weniger Masse besitzt.

Bei induktiven Schrumpfgeräten bzw. Schrumpfvorrichtungen bildet nämlich der in den von der Induktionsspule umfangsseitig umschlossenen Raum eingeschobene Werkzeughalter mit seiner Hülsenpartie einen wesentlichen Bestandteil des magnetischen Kreises. Die Hülsenpartie bildet nämlich den Metallkern der Induktionsspule. Das Maß der zu messenden Induktivität hängt daher entscheidend davon ab, in welchem Maß die Hülsenpartie das Zentrum bzw. den sogenannten Kern der Induktionsspule ausfüllt, d. h. ob die betreffende Hülsenpartie einen kleineren oder größeren (Außen-)Durchmesser bzw. mehr oder weniger Masse besitzt.

Diesbezüglich ist es hier dann zweckmäßig, wenn vor Beginn - insbesondere automatisiert - die Geometrie bzw. der Außendurchmesser der in die Induktionsspule eingebrachten Hülsenpartie ermittelt - und so die eingebrachte Hülsenpartie "erkannt" wird. Dieses ist beispielsweise in den deutschen Patentanmeldungen, 10 2015 016 831.2 und 10 2019 112 521.9, und in der europäischen Patentanmeldung, 19 17 6562.7, beschrieben. Deren Inhalt wird hiermit zum Gegenstand dieser Anmeldung gemacht.

Gilt bzw. ist dann die eingebrachte Hülsenpartie erkannt, so können dann für die eingebrachte Hülsenpartie bzw. deren Erwärmungsprozess Erwärmungsparameter bestimmt bzw. festgelegt werden.

Solche Erwärmungsparameter können insbesondere sein eine Schrumpf-/Erwärmungsfrequenz und/oder eine Schrumpf-/Erwärmungstemperatur sowie und/oder eine Zeit für den Erwärmungsvorgang und/oder eine maximale Zeit für den Erwärmungsvorgang und/oder eine Energie (Stromintegral).

So ist es insbesondere auch zweckmäßig, die Frequenz für den (Erwärmungs-)Strom (d.h. die Schrumpf-/Erwärmungsfrequenz) nahe an der Resonanzfrequenz festzulegen, beispielsweise "knapp" darunter oder darüber, insbesondere "knapp" darüber, steigt mit Annäherung der Schrumpf-/Erwärmungsfrequenz an die Resonanzfrequenz die Effizienz/Effektivität der Erwärmung. Die Festlegung der Schrumpf-/Erwärmungsfrequenz gleich mit der Resonanzfrequenz sollte vermieden werden, können andernfalls Resonanzeffekte zu einer Überlastung von Bauteilen bei der Induktionsspulen-Baueinheit führen.

Ferner kann es auch zweckmäßig sein, die Ermittlung der Verläufe bzw. des zeitlichen Verlaufs und/oder des Frequenzverlaufs durch Messung zu bewerkstelligen. Ein entsprechendes Messgerät (oder eine funktionsvergleichbare Schaltung) bzw. entsprechende Messgeräte (oder Schaltungen) kann/können bei der Induktionsspulen-Baueinheit vorgesehen werden.

Sollen so die Stromstärken gemessen werden, ist es zweckmäßig in Reihe geschaltete Strom(-stärken-)messgeräte, wie Amperemeter oder Multimeter, oder auch eine Messspule einzusetzen; soll die Spannung gemessen werden, ist es zweckmäßig ein parallel geschaltetes Spannungsmessgerät einzusetzen.

Eine solche Messung der Verläufe kann dabei in einem Eingangskreis einer Schaltung der Induktionsspulen-Baueinheit und/oder einem Zwischenkreis der Induktionsspulen-Baueinheit und/oder Ausgangskreis bzw. an der Induktionsspule durchgeführt werden.

Die Messungen können auch (zeitlich) parallel am mehreren der genannten Stellen der Schaltung durchgeführt werden.

### Baueinheit

Bei der **Induktionsspulen-Baueinheit -** zur Durchführung des Verfahrens - ist weiter auch eine Schaltung vorgesehen, mittels welcher die Induktionsspule mit Leistung versorgbar ist.

Zweckmäßig kann es sein, dass die Schaltung mindestens ein Leistungshalbleiterbauelement, insbesondere mindestens einen Bipolartransistor mit isolierter Gate-Elektrode (IGBT) und/oder einen Metall-Oxid-Halbleiter-Feldeffekttransistor (MOSFET), aufweist, weisen diese gutes Durchlassverhalten, hohe Sperrspannungen und Robustheit auf - und sind darüber hinaus nahezu leistungslos ansteuerbar.

Ferner ist bei der **Induktionsspulen-Baueinheit** auch eine Steuereinheit vorgesehen, mittels welcher die Induktionsspule und die Schaltung steuerbar sind. Die Steuereinheit ist darüber hinaus derart eingerichtet, dass - kurz - das **Verfahren** (in seinen Grundzügen, wie insbesondere auch mit all den vorbeschriebenen Ausgestaltungen und Weiterbildungen) durchführbar ist.

D.h. insbesondere auch, dass die - die Induktionsspule und die Schaltung steuernde - Steuereinheit derart eingerichtet ist, dass während des, insbesondere ununterbrochenen, induktiven Erwärmungsvorgangs bei der in die Induktionsspule eingebrachten Hülsenpartie der zeitliche Verlauf oder der Frequenzverlauf des Spulenstroms und/oder der Spulenspannung und/oder des Eingangsstroms und/oder der Eingangsspannung für die in die Induktionsspule eingebrachte Hülsenpartie ermittelbar sind bzw. ist, weiter der (Spulenstrom-)Verlauf und/oder der (Spulenspannung-)Verlauf und/oder der (Eingangsstrom-)Verlauf und/oder der (Eingangsspannung-)Verlauf, gegebenenfalls auch deren abgeleiteter Größen, analysierbar sind bzw. ist und anhand des analysierten Verlaufs bzw. der ausgewerteten Verläufe, insbesondere anhand eines Verlaufsverhaltens und/oder einer Verlaufsveränderung und/oder eines Verlaufsveränderungsverhaltens entscheidbar ist, ob der, insbesondere ununterbrochene, Erwärmungsvorgang fortgesetzt oder beendet wird.

Auch ist es zweckmäßig, wenn eine oder mehrere Messeinrichtungen vorgesehen wird bzw. werden, mittels welcher bzw. welchen der bzw. die zeitlichen Verläufe oder der bzw. die Frequenzverläufe messbar sind bzw. ist.

Bevorzugt ist dabei die Messeinrichtung eine Strom-Messeinrichtung oder eine Spannungs-Messeinrichtung.

Auch bevorzugt kann die Messeinrichtung in einem Eingangskreis und/oder in einem Zwischenkreis und/oder in einem Ausgangskreis der Schaltung eingebaut sein.

Bevorzugt kann das **Verfahren** (wie auch die **Induktionsspulen-Baueinheit)** auch zur Erkennung von einer bereits warmen, in die Induktionsspule der Induktionsspulen-Baueinheit eingebrachten Hülsenpartie eines Werkzeughalters eingesetzt werden. Hierbei wird unter Verwendung der ermittelten Parameter der Vorerwärmungszustand der Hülsenpartie festgestellt.

Zeigen so beispielsweise die Parameter der zeitlichen Verläufe bereits zu Beginn der Erwärmungsvorgangs bei einer eingebrachten Hülsenpartie einen horizontalen Verlauf oder ein Ansteigen des Verlaufs, so lässt dies auf eine bereits vorerwärmte Hülsenpartie schließen.

Indem durch das **Verfahren** sowie bei der **Induktionsspulen-Baueinheit** ein weitestgehend automatischer bzw. automatisierter Betrieb, d.h. das induktive Einschrumpfen von Werkzeugen in Werkzeughaltern, im Speziellen das Erwärmen der Werkzeughalter, für jeweils einen gerade in der Induktionsspulen-Baueinheit eingebrachten Werkzeughalter durchgeführt werden kann, werden manuelle Eingriffe zur Einstellung von Betriebsparametern hierbei überflüssig gemacht, so dass einerseits die hierfür bisher benötigte Zeit eingespart wird und andererseits durch den automatischen/automatisierten Betrieb auch hohe Standards hinsichtlich Betriebssicherheit und Toleranzen eingehalten werden können, um einen vorschriftsmäßigen Betrieb der Baueinheit sicherstellen zu können. Auch ein effizienter Schutz vor Überhitzen eines zu erwärmenden/aufzuweitenden Werkzeughalters kann durch das Verfahren und bei der Induktionsspulen-Baueinheit bewirkt werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Insbesondere sind diese Merkmale jeweils einzeln und in beliebiger geeigneter Kombination mit dem erfindungsgemäßen Verfahren kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Induktionsspulen-Baueinheit gemäß einer Ausführung im Mittel-Längsschnitt;
- FIG 2: einen Schaltplan einer Schaltung zum Speisen einer Induktionsspule, die für eine Induktionsspulen-Baueinheit zum Einsatz kommen kann;
- FIG 3: ein zeitlicher Verlauf eines Spulenstroms bei einer in die Induktionsspule einer Induktionsspulen-Baueinheit eingebrachten Hülsenpartie beim Schrumpfen;
- FIG 4: der idealisierte zeitliche Verlauf des effektiven Spulenstroms nach FIG 3.

### Automatisierte Erwärmungssteuerung eines Schrumpfvorgangs mit einer Schrumpfvorrichtung

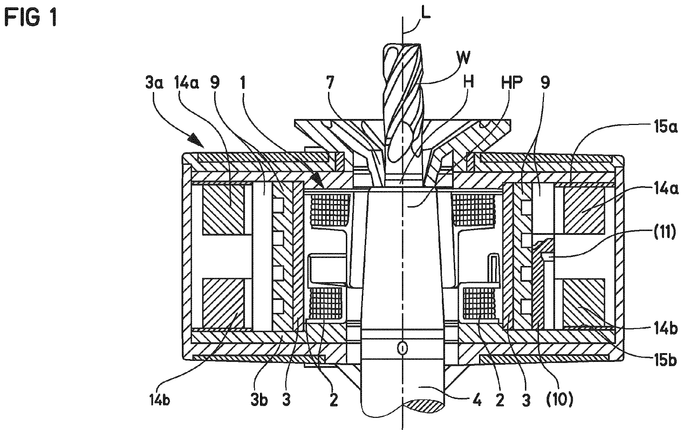

FIG 1 zeigt einen grundlegenden Aufbau einer Induktionsspulen-Baueinheit, welche aufgrund ihrer hier vorgesehenen Funktion (im Folgenden) auch als Schrumpfvorrichtung bezeichnet werden soll.

Wie FIG 1 verdeutlicht, sieht die Schrumpfvorrichtung eine Induktionsspule 1 mit einzelnen Windungen 2 vor, in deren Zentrum ein Werkzeughalter 4 eingeschoben wird, um den Halteschaft H eines Werkzeugs W, wie hier beispielsweise eines Fräsers, in die Hülsenpartie HP ein- oder auszuschrumpfen.

Das Funktionsprinzip, das dem Ein- und Ausschrumpfen zu Grunde liegt, ist näher in der deutschen Patentanmeldung DE 199 15 412 A1 beschrieben. Deren Inhalt wird hiermit zum Gegenstand dieser Anmeldung gemacht.

An ihrem Außenumfang ist die Induktionsspule 1 mit einem ersten Mantel 3 aus elektrisch nichtleitendem und magnetisch leitendem Material versehen.

Typischerweise besteht der erste Mantel 3 entweder aus einem Ferrit oder einem Metallpulver bzw. Metallsinterwerkstoff, dessen einzelne Partikel elektrisch isolierend voneinander getrennt sind und die auf diese Art und Weise insgesamt gesehen im Wesentlichen magnetisch leitend und elektrisch nichtleitend sind.

Der erste Mantel 3 ist weiter so ausgeführt, dass er in Umfangsrichtung völlig in sich geschlossen ist, also die Umfangsfläche der Induktionsspule 1 vollständig überdeckt, so dass auch in der Theorie keinerlei "magnetische Lücken" verbleiben, abgesehen von irrelevanten lokalen Durchbrüchen, wie etwa einzelnen und/oder kleinen lokalen Bohrungen o. ä.

Wie FIG 1 weiter auch zeigt, hat bei der Schrumpfvorrichtung die Abschirmung aus magnetisch leitendem und elektrisch nichtleitendem Material mit dem ersten Mantel 3 nicht bereits ihr Bewenden.

Stattdessen schließt sich an mindestens einer, besser beiden Stirnseiten des ersten Mantels 3 eine magnetische Abdeckung 3a, 3b aus dem besagten Material an, die im Regelfall den ersten Mantel 3 kontaktieren.

Auf der dem Werkzeughalter 4 abgewandten Stirnseite der Induktionsspule 1 ist die magnetische Abdeckung 3a vorzugsweise als ganz oder bevorzugt abschnittweise auswechselbarer Polschuh ausgebildet, d. h. als ringförmiges Gebilde mit einer zentralen Öffnung, die einen Durchlass 7 für das ein- oder auszuspannende Werkzeug W bildet.

Auf der dem Werkzeughalter 4 zugewandten Stirnseite der Induktionsspule 1 ist die magnetische Abdeckung 3b vorzugsweise als in sich ebene Ringscheibe ausgestaltet, die die Wicklungen der Induktionsspule 1 idealerweise vollständig übergreift und einen zentralen Durchlass für die Hülsenpartie HP aufweist.

Um die Abschirmung noch weiter zu verbessern, sind, wie FIG 1 auch zeigt, die Induktionsspule 1 und ihr erster Mantel 3 an dessen Außenumfang von einem zweiten Mantel 9 umgeben - und zwar so, dass der erste Mantel 3 und der zweite Mantel 9 einander berühren, idealerweise auf dem überwiegenden bzw. gesamten Teil ihrer einander zugewandten Umfangsflächen.

Dieser zweite Mantel 9 ist aus magnetisch nicht leitfähigem und elektrisch leitfähigem Material, beispielsweise Aluminium, hergestellt.

Unter "elektrisch leitfähig" wird hier ein nicht nur lediglich lokal, sozusagen "kornweise" elektrisch leitfähiges Material verstanden, sondern ein Material, das in relevantem Umfang die Ausbildung von Wirbelströmen zulässt.

Das Besondere an dem zweiten Mantel 9 ist, dass er bevorzugt so ausgelegt und bevorzugt in radialer Richtung so dick ausgelegt ist, dass in ihm unter dem Einfluss des ihn durchdringenden Streufeldes der Induktionsspule 1 Wirbelströme erzeugt werden, die eine Schwächung des unerwünschten Streufeldes bewirken.

Weiter ist der zweite Mantel 9 an seinem Umfang von den nachfolgend noch näher zu erläuternden Leistungshalbleiterbauelementen 10 umgeben, die unmittelbar am Außenumfang des zweiten Mantels 9 in dortigen Aussparungen 11 angeordnet sind (nur angedeutet).

Diese Leistungshalbleiterbauelemente 10 weisen zwei große Hauptflächen und vier kleine Seitenflächen auf. Die großen Hauptflächen sind vorzugsweise mehr als viermal größer als jede der einzelnen Seitenflächen.

Die Leistungshalbleiterbauelemente 10 sind so angeordnet, dass eine ihrer großen Hauptflächen in wärmeleitendem Kontakt mit dem zweiten Mantel 9 steht, im Regelfall an dessen Außenumfang, wobei die betreffende große Hauptfläche des Leistungshalbleiterbauelements 10 mithilfe eines wärmeleitenden Klebstoffs an die Umfangsoberfläche des zweiten Mantels 9 angeklebt ist.

Jedes der Leistungshalbleiterbauelemente 10 besitzt verschiedene Anschlüsse zur Spannungsversorgung.

Weiter sind, wie FIG 1 auch zeigt, Kondensatoren 14a, 14b am Außenumfang der Induktionsspule 1 um diese herumgruppiert sind.

Bei den Kondensatoren 14a handelt es sich bevorzugt um Glättungskondensatoren, die unmittelbarer Bestandteil eines Leistungskreises sind; bei den Kondensatoren 14b handelt es sich bevorzugt um Schwingkreiskondensatoren, die ebenfalls unmittelbarer Bestandteil des Leistungskreises sind.

Um die Kondensatoren 14a, 14b elektrisch anzuschließen, sind hier mehrere elektrische Platinen 15a, 15b vorgesehen, die jeweils den Außenumfang der Induktionsspule 1 umgreifen.

Jede dieser Platinen 15a, 15b bildet vorzugsweise eine Ringscheibe. Jeder der Platinen 15a, 15b besteht vorzugsweise aus FR4 oder ähnlichen für Platinen gebräuchlichen Materialien.

Wie man in FIG 1 auch sieht, ist die Rotationssymmetrieachse jeder der beiden hier als Platinenringscheiben ausgeführten Platinen 15a, 15b hier koaxial zur Längsachse L der Induktionsspule (auch des Werkzeughalters 4/Werkzeugs W).

Die obere der beiden elektrischen Platinen 15a trägt die Glättungskondensatoren 14a, deren Anschlussfahnen die obere Platine 15a durchgreifen oder mithilfe der SMD-Technik mit der oberen Platine 15a verbunden sind, so, dass die Glättungskondensatoren 14a von der oberen Platine 15a herabhängen.

Die untere der beiden Platinen 15b ist entsprechend aufgebaut, die Schwingkreiskondensatoren 14b stehen nach oben von ihr ab.

Anschaulich zusammengefasst, die Leistungshalbleiter 10 bilden einen ersten gedachten Zylinder, der die Induktionsspule 1 umringt; die Kondensatoren 14a, 14b bilden einen zweiten gedachten Zylinder, der den ersten gedachten Zylinder umringt; die gegenüber dem Streufeld nur weniger empfindlichen Kondensatoren 14a, 14b bilden den gedachten, äußeren Zylinder, während die auf einen möglichst streufeldarmen Einbauraum angewiesenen Leistungshalbleiterbauelemente 10 den gedachten, inneren Zylinder bilden.

Wie weiter FIG 1 zeigt, ist die Induktionsspule 1 nicht über ihre gesamte Länge in Richtung ihrer Längsachse L hinweg "voll bewickelt" ist. Stattdessen besteht sie - hier - aus zwei, im Regelfall zylindrischen Wicklungspaketen. Diese bilden jeweils eine Stirnseite der Induktionsspule 1. Sie halten untereinander einen Abstand ein, der - hier beispielshaft - ca. um mindestens den Faktor 1,5 größer ist, als die Erstreckung jeder der Wicklungspakete in Richtung der Längsachse L der Induktionsspule 1.

Eine derartige Induktionsspule 1 trägt zur Verringerung der Blindleistung bei, da ihr die Wicklungen im "Mittenbereich" fehlen, die unter dem Gesichtspunkt der möglichst effektiven Beheizung der Hülsenpartie HP des Werkzeughalters nicht unbedingt benötigt werden, die aber - wenn vorhanden - die Tendenz haben zusätzliche Blindleistung produzieren, ohne einen wirklich wichtigen Beitrag zur Beheizung zu leisten.

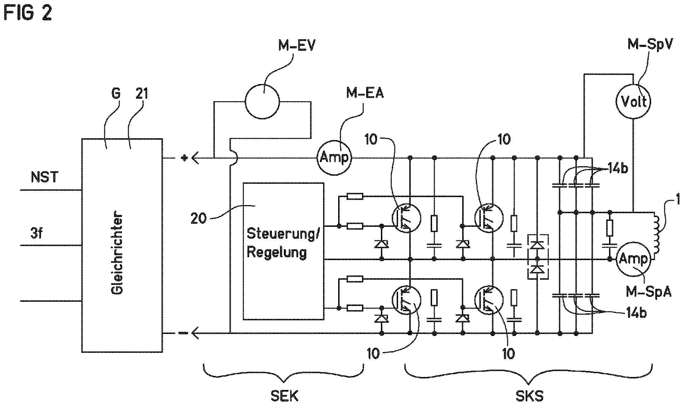

Um die Induktionsspule 1 - mit möglichst wenig Verlusten - zu versorgen, ist eine - in FIG 2 näher dargestellte Schaltung vorgesehen.

Wie FIG 2 zeigt, weist diese Schaltung dazu einen Schwingkreis SKS auf (vgl. FIG 2).

Bei dem Schwingkreis SKS schwingt der überwiegende Teil der benötigten Energie periodisch (hochfrequent) zwischen der Induktionsspule 1 und einer Kondensatoreinheit 14a, 14b hin- und her. Dadurch muss in jeder Periode bzw. periodisch nur die dem Schwingkreis SKS durch seine Heizleistung und seine sonstige Verlustleistung entzogene Energie nachgespeist werden. Somit entfallen die bisherigen, sehr hohen Verluste.

Die die Induktionsspule 1 speisende Leistungselektronik wird, wie FIG 2 zeigt, eingangsseitig mit dem allgemein verfügbaren Netzstrom NST, der in Europa (dreiphasig Drehstrom, 3f) 400 V / 50 Hz (in andern Ländern entsprechende Werte) beträgt, gespeist.

Der aus dem Netz bezogene Strom wird, wie in FIG 2 verdeutlicht, von einem Gleichrichter G 21 in Gleichstrom umgewandelt, der seinerseits durch den oder die Glättungskondensatoren 14a geglättet wird (nicht gezeigt).

Mit diesem Gleichstrom wird, wie FIG 2 weiter auch verdeutlicht, der eigentliche Schwingkreis SKS gespeist.

Das Rückgrat des Schwingkreises SKS bilden die Leistungshalbleiterbauelemente 10, die Schwingkreiskondensatoren 14b und die zum Ein- und Ausschrumpfen dienende Induktionsspule 1.

Gesteuert bzw. geregelt wird der Schwingkreis SKS von Steuerelektronik SEK, die mit Gleichstrom aus dem Gleichrichter G gespeist wird.

Die Leistungshalbleiterbauelemente 10 werden vorzugsweise durch Transistoren des Typs "Insulated-Gate Bipolar Transistor" kurz IGBT verwirklicht.

Die Steuerelektronik SEK schaltet die Leistungshalbleiterbauelemente 10/IGBT mit einer Frequenz, die die sich am Schwingkreis SKS einstellende Arbeitsfrequenz vorgibt.

Wichtig ist, dass der Schwingkreis SKS niemals genau in Resonanz arbeitet.

Dies würde hier zur raschen Zerstörung der Leistungshalbleiterbauelemente 10 durch die Spannungsspitzen führen. Stattdessen ist die Steuerelektronik SEK so gestaltet, dass sie die Leistungselektronik bzw. deren Schwingkreis SKS in einem vorgebbaren Arbeitsbereich betreibt, der lediglich nahe der Resonanz bzw. Eigenfrequenz des Systems liegt.

Vorzugsweise wird der Schwingkreis (mittels der Steuerung 20) so gesteuert bzw. geregelt, dass gilt 0,9 ≤ cos ϕ ≤ 0,99. Besonders günstig sind Werte, die im Bereich 0,95 ≤ cos ϕ ≤ 0,98 liegen. Dies führt nochmals zu einer Vermeidung von Spannungsspitzen und leistet daher der Miniaturisierung weiteren Vorschub.

Um das Schrumpfgerat 1 mit bestimmter Betriebssicherheit - möglichst automatisiert - zu betreiben, ist die Schrumpfvorrichtung mit einer automatischen Erwärmungssteuerung/-regelung ausgestattet, welche einen automatisierten Schrumpfbetrieb ermöglicht.

Diese Erwärmungssteuerung/-regelung wird durch eine entsprechende Steuerung bzw. Regelung 20 bei der Schrumpfvorrichtung umgesetzt, welche - grundsätzlich - auf einer Analyse von - gemessenem - Spulenstrom M-SpA, Spulenspannung M-SpV und/oder Eingangsstrom M-EA und/oder Eingangsspannung M-EV bzw. deren zeitlichen Verläufen basiert.

Um Spulenstrom (M-SpA), Spulenspannung (M-SpV) und Eingangsstrom (M-EA) und Eingangsspannung (M-EV) zu messen, sieht die Schaltung, wie FIG 2 auch zeigt, entsprechend Strom-/Spannungsmessgeräte M-SpA (Spulenstrom), M-SpV (Spulenspannung) bzw. M-EA (Eingangstrom) bzw. M-EV (Eingangsspannung) vor, welche an entsprechend gezeigten Positionen und in entsprechender Weise in der Schaltung verbaut sind.

Hängen dabei die gemessenen Größen bzw. deren Verlauf bei einer zum Schrumpfen eingesetzten Induktionsspule eben auch von der Temperatur der eingebrachten Hülsenpartie des Werkzeughalters ab, so kann dies in vorteilhafter Weise für eine - automatisierte - Erwärmungssteuerung genutzt werden, um so - bei Vermeidung "manueller" Fehlerquellen, weil automatisiert, - die Sicherheit bei einer Schrumpfvorrichtung zu verbessern.

### (A) (Automatische) Erkennung des/der aktuell in die Schrumpfvorrichtung bzw. deren Induktionsspule eingebrachten Werkzeughalters/Hülsenpartie

Vor Beginn der Erwärmung der in die Induktionsspule (1, vgl. FIGen 1 und 2) eingebrachten Hülsenpartie (HP, vgl. FIG 1) wird zunächst - automatisiert - die Geometrie bzw. der Außendurchmesser der in die Induktionsspule eingebrachten Hülsenpartie ermittelt - und so die eingebrachte Hülsenpartie "erkannt".

Dieses ist beispielsweise in den deutschen Patentanmeldungen, 10 2015 016 831.2 und 10 2019 112 521.9, und in der europäischen Patentanmeldung, 19 17 6562.7, beschrieben. Deren Inhalt wird hiermit zum Gegenstand dieser Anmeldung gemacht.

Gilt bzw. ist dann die eingebrachte Hülsenpartie erkannt, so können dann für die eingebrachte Hülsenpartie bzw. deren Erwärmungsprozess (vorher) festgelegte Erwärmungsparameter festgelegt werden, wie u. A. insbesondere die (individuelle) Schrumpf-/Erwärmungsfrequenz.

Der Erwärmungsprozess der eingebrachten Hülsenpartie wird dann mit seiner individuellen Schrumpf-/Erwärmungsfrequenz gestartet, wobei gleichzeitig mit dem Start der Leistungsversorgung der Induktionsspule auch die Messung des Spulenstroms, der Spulenspannung, des Eingangsstroms und der Eingangsspannung beginnt (vgl. dazu Schaltung nach FIG 2).

### (B) (Automatisierter/automatisiert gesteuerter) Schrumpfvorgang (FIGen 3 und 4)

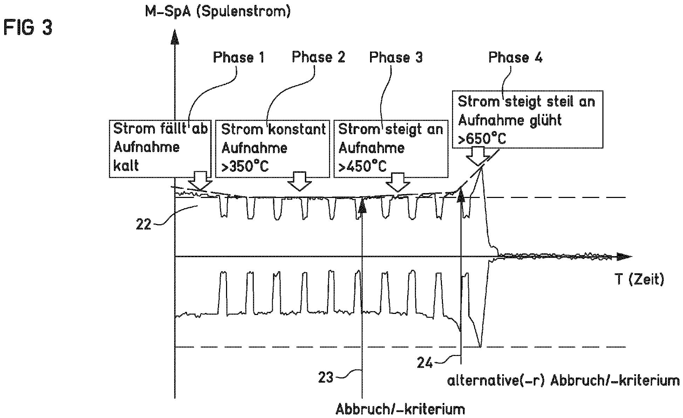

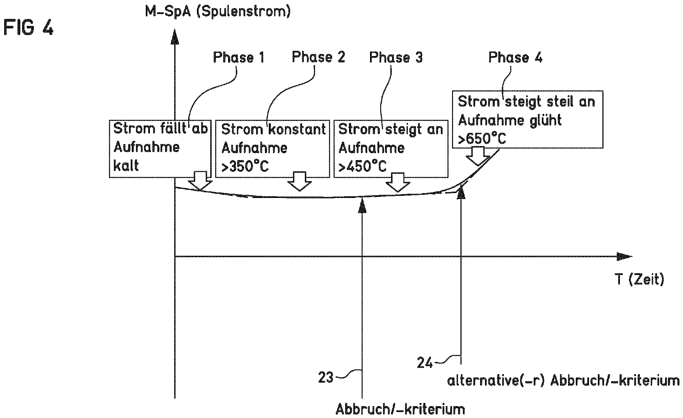

FIG 3 (und - idealisiert - FIG 4) verdeutlicht, wie anhand des zeitlichen Verlaufs 22 des Spulenstroms M-SpA der Erwärmungsprozess der eingebrachten Hülsenpartie gesteuert (20) werden kann. FIG 4 entspricht FIG 3 mit einer idealisierten Darstellung des Spulenstrom M-SpA (effektive Stromstärke, gefiltert und geglättet).

Die hier vorgestellte Steuerung (20) auf Basis des Spulenstromverlaufs 22 lässt sich in entsprechender Weise auch mit der Spulenspannung M-SpV und/oder dem Eingangsstrom M-EA und/oder der Eingangsspannung M-EV bzw. daraus ableitbarer Größen, wie die Phasenlage und die Phasenverschiebung, durchführen (, da deren Verläufe dem des Spulenstroms - qualitativ - entsprechen).

Wie FIG 3 und FIG 4 verdeutlichen, wird im Zeitverlauf (T (Zeit)) mittels des erwähnten Strommessgerätes M-SpA (Spulenstrom) der Spulenstrom M-SpA fortwährend des Erwärmungsvorgangs gemessen.

FIGen 3 und 4 zeigen jeweils einen typischen (Kurven-)Verlauf 22 eines (gemessenen) Spulenstroms M-SpA während der Erwärmung der eingebrachten Hülsenpartie (beginnend von der kalten Hülsenpartie bis zu deren Glühen, Phasen 1 bis 4).

Soweit für die Steuerung relevant, lässt sich dem Spulenstromverlauf 22 folgendes entnehmen.

Wie die FIGen 3 und 4 zeigen, nimmt zunächst der Spulenstrom M-SpA mit Beginn (und hierbei kalter Hülsenpartie) und dann fortlaufender Zeitdauer sowie anfänglicher Erwärmung der Hülsenpartie ab (Phase 1). D.h., die Steigung des Spulenstromverlaufs ist negativ bzw. an den Spulenstromverlauf angelegte Tangenten verlaufen fallend.

Nach anfänglicher Abnahme bleibt der Spulenstrom M-SpA dann im weiteren Zeit-/Erwärmungsverlaufs annähernd konstant (, d.h. die Steigung des Spulenstromverlaufs ist Null bzw. an den Spulenstromverlauf angelegte Tangenten verlaufen horizontal) (Phase 2), wobei der Spulenstrom M-SpA dann - im weiterem Zeitverlauf und weiterer Erwärmung (Phase 3) (bis zum Glühen der Hülsenpartie, Phase 4) - wieder zunimmt bzw. ansteigt (, d.h. die Steigung des Spulenstromverlaufs ist positiv bzw. an den Spulenstromverlauf angelegte Tangenten verlaufen steigend). Dabei erfolgt dieser Anstieg mit zunehmender Steigung/Steilheit (Phasen 3 und 4).

Entsprechend der Steigungen bzw. der fallenden, steigenden und horizontalen Verläufe der Tangenten ergibt sich auch das Krümmungsverhalten des Spulenstromverlaufs 22.

Die Spulensteuerung 20 macht sich diesen - zu erwartenden - Spulenstromverlauf 22 zu Nutze, indem sie darauf aufbauend ihre Steuerung auslegt.

Dabei - werden die gemessenen Spulenströme M-SpA fortwährend an die Steuerung 20 übertragen - ermittelt die Steuerung 20 fortwährend die Steigung des Spulenstromverlaufs 22 bzw. die Tangenten an den Spulenstromverlauf 22 sowie auch dessen Krümmungsverhalten.

Tritt nun der Spulenstromverlauf M-SpA aus seiner horizontalen, gleichbleibenden Phase in den steigenden Verlauf über (Phase 2 zu Phase 3), d.h. die Tangenten beginnen (aus der Horizontalen heraus) wieder anzusteigen bzw. die Steigung (und Krümmung) des Spulenstromverlaufs 22 wird positiv ("Abbruchkriterium" 23), schaltet die Steuerung 20 den Erwärmungsvorgang (automatisch) ab, hat hier der Erwärmungszustand der eingebrachten Hülsenpartie eine kritische Phase/Temperatur erreicht.

Wollte man alternativ höhere Erwärmungstemperaturen zulassen, könnte man auch einen Steigungsgrenzwert als "Abbruchskriterium" vorgeben (Steigung/Tangente in Phase 4) (alternativer Abbruch/alternatives Abbruchkriterium 24). Erreicht dann der Spulenstromverlauf diese vorgegebene Grenzsteigung, so würde dann die Steuerung 20 den Erwärmungsvorgang (automatisch) abschalten.

Die Steuerung ermöglicht so ein weitestgehend automatisches bzw. automatisiertes Schrumpfen. Manuelle Eingriffe zur Einstellung von Betriebsparametern sind hierbei überflüssig, so dass einerseits die hierfür bisher benötigte Zeit eingespart wird und andererseits durch den automatischen/automatisierten Betrieb auch hohe Standards hinsichtlich Betriebssicherheit und Toleranzen eingehalten werden können, um einen vorschriftsmäßigen Betrieb der Baueinheit sicherstellen zu können. Auch ein effizienter Schutz vor Überhitzen der Hülsenpartie wird erreicht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. **Verfahren zur Steuerung eines induktiven Erwärmungsvorgangs** für eine Induktionsspulen-Baueinheit mit einer in einer Induktionsspule der Induktionsspulen-Baueinheit eingebrachten Hülsenpartie eines Werkzeughalters,
**dadurch gekennzeichnet, dass**
- während eines, insbesondere ununterbrochenen, induktiven Erwärmungsvorgangs bei einer in die Induktionsspule eingebrachten Hülsenpartie zumindest ein zeitlicher Verlauf oder ein Frequenzverlauf eines Spulenstroms und/oder einer Spulenspannung und/oder eines Eingangsstroms und/oder einer Eingangsspannung für die in die Induktionsspule eingebrachte Hülsenpartie ermittelt werden/wird,
- der (Spulenstrom-)Verlauf und/oder der (Spulenspannung- )Verlauf und/oder der (Eingangsstrom-)Verlauf und/oder der (Eingangsspannung-)Verlauf, gegebenenfalls daraus abgeleiteter Größen, analysiert wird bzw. werden und anhand des analysierten Verlaufs bzw. der ausgewerteten Verläufe, insbesondere anhand eines Verlaufsverhaltens und/oder einer Verlaufsveränderung und/oder eines Verlaufsveränderungsverhaltens, entschieden wird, ob der, insbesondere ununterbrochene, Erwärmungsvorgang fortgesetzt oder beendet wird.

2. **Verfahren zur Steuerung eines induktiven Erwärmungsvorgangs** nach einem der voranstehenden Ansprüche,
**dadurch gekennzeichnet, dass**
die zeitlichen Verläufe des Spulenstroms, der Spulenspannung, des Eingangsstroms und der Eingangsspannung ermittelt werden, die Verläufe aller ermittelten zeitlichen Verläufe analysiert werden und anhand aller analysierten Verläufe entschieden wird, ob der Erwärmungsvorgang fortgesetzt oder beendet wird und/oder dass eine abgeleitete Größe eine Phasenlage oder eine Phasenverschiebung ist.

3. **Verfahren zur Steuerung eines induktiven Erwärmungsvorgangs** nach einem der voranstehenden Ansprüche,
**dadurch gekennzeichnet, dass**
der zeitliche Verlauf oder der Frequenzverlauf unter Verwendung effektiver Strom- bzw. Spannungswerte abbildet wird.

4. **Verfahren zur Steuerung eines induktiven Erwärmungsvorgangs** nach einem der voranstehenden Ansprüche,
**dadurch gekennzeichnet, dass**
bei der Analyse des zeitlichen Verlaufs ein Verlaufsverhalten und/oder eine Verlaufsveränderung und/oder ein Verlaufsveränderungsverhalten ermittelt werden/wird und/oder dass bei der Analyse des Frequenzverlaufs ein Extremum, insbesondere eine Resonanzfrequenz, und/oder eine (Band-)Breite oder Varianz ermittelt werden/wird.

5. **Verfahren zur Steuerung eines induktiven Erwärmungsvorgangs** nach einem der voranstehenden Ansprüche,
**dadurch gekennzeichnet, dass**
bei der Analyse des zeitlichen Verlaufs, insbesondere effektive, Strom- bzw. Spannungswerte zu verschiedene Zeitpunkten des induktiven Erwärmungsvorgangs analysiert, insbesondere verglichen, werden, insbesondere unter Verwendung von Tangenten oder Steigungsgeraden an den zeitlichen Verlauf und/oder dass bei der Analyse des Frequenzverlaufs dieser zu analysierende Frequenzverlauf mit einem Referenzverlauf verglichen wird, insbesondere unter Verwendung des Extremums und/oder der (Band-)Breite oder der Varianz.

6. **Verfahren zur Steuerung eines induktiven Erwärmungsvorgangs** nach einem der voranstehenden Ansprüche,
**dadurch gekennzeichnet, dass**
bei der Analyse des zeitlichen Verlaufs eine Mehrzahl von Tangenten an den zeitlichen Verlauf angelegt werden und die Entscheidung unter Berücksichtigung einer Änderung von Steigungen der Tangenten getroffen wird.

7. **Verfahren zur Steuerung eines induktiven Erwärmungsvorgangs** nach einem der voranstehenden Ansprüche,
**dadurch gekennzeichnet, dass**
bei einer Entscheidungsfindung auch eine Geometrie und/oder eine sonstige physikalische Eigenschaft der in die Induktionsspule der Induktionsspulen-Baueinheit eingebrachten Hülsenpartie berücksichtigt wird.

8. **Verfahren zur Steuerung eines induktiven Erwärmungsvorgangs** nach einem der voranstehenden Ansprüche,
**dadurch gekennzeichnet, dass**
der zu analysierende zeitliche Verlauf oder der Frequenzverlauf vor der Analyse und/oder bei Analyse geglättet, gemittelt, gefiltert und/oder, insbesondere auf eine, insbesondere deutsche oder europäische, Referenznetzspannung, normiert wird.

9. **Verfahren zur Steuerung eines induktiven Erwärmungsvorgangs** nach einem der voranstehenden Ansprüche,
**dadurch gekennzeichnet, dass**
die Ermittlung des zeitlichen Verlaufs oder des Frequenzverlaufs unter Verwendung einer Messung eines Stroms oder einer Spannung erfolgt, wobei insbesondere ein effektiver Strom oder effektive Spannung gemessen wird.

10. **Verfahren zur Steuerung eines induktiven Erwärmungsvorgangs** nach einem der voranstehenden Ansprüche,
**dadurch gekennzeichnet, dass**
der Eingangsstrom und/oder die Eingangsspannung in einem Zwischenkreisstrom, insbesondere nach einem Gleichrichter, oder in einem Eingangskreis, insbesondere vor einem Gleichrichter und/oder an einem Anschlussteil, gemessen wird.

11. **Verfahren zur Steuerung eines induktiven Erwärmungsvorgangs** nach einem der voranstehenden Ansprüche,
**eingesetzt** zur Erkennung von einer bereits warmen, in die Induktionsspule der Induktionsspulen-Baueinheit eingebrachten Hülsenpartie eines Werkzeughalters, wobei anhand des analysierten zeitlichen Verlaufs bzw. der ausgewerteten zeitlichen Verläufe oder des analysierten Frequenzverlaufs bzw. der ausgewerteten Frequenzverläufe, insbesondere anhand des Verlaufsverhaltens und/oder der Verlaufsveränderung und/oder des Verlaufsveränderungsverhaltens des zeitlichen Verlaufs bzw. des Extremums und/oder der (Band-)Breite oder der Varianz des Frequenzverlaufs, der Vorerwärmungszustand der Hülsenpartie festgestellt wird.

12. **Induktionsspulen-Baueinheit** zur Durchführung eines Verfahrens nach mindestens einem der voranstehenden Verfahrensansprüche mit einer Induktionsspule, in welche eine Hülsenpartie eines Werkzeughalters einbringbar ist,
**gekennzeichnet durch**
- eine Schaltung, mittels welcher die Induktionsspule mit Leistung versorgbar ist, und
- eine Steuereinheit, mittels welcher die Induktionsspule und die Schaltung derart steuerbar ist und welche derart eingerichtet ist, dass ein Verfahren nach mindestens einem der voranstehenden Verfahrensansprüche ausführbar ist.

13. Induktionsspulen-Baueinheit nach mindestens dem voranstehenden Anspruch,
**gekennzeichnet durch**
eine oder mehrere Messeinrichtungen, mittels welcher bzw. welchen der bzw. die zeitlichen Verläufe bzw. der oder die Frequenzverläufe des Spulenstroms und/oder der Spulenspannung und/oder des Eingangsstroms und/oder der Eingangsspannung messbar ist bzw. sind.

14. Induktionsspulen-Baueinheit nach mindestens dem voranstehenden Anspruch,
**dadurch gekennzeichnet, dass**
die Messeinrichtung eine Strom-Messeinrichtung oder eine Spannungs-Messeinrichtung ist und/oder dass die Messeinrichtung in einem Eingangskreis und/oder in einem Zwischenkreis und/oder in einem Spulenkreis der Schaltung eingebaut ist.
